# EUROPÄISCHE PATENTSCHRIFT

(11) **EP 0 970 356 B1**
(45) Veröffentlichungstag und Bekanntmachung des Hinweises auf die Patenterteilung: **27.08.2003**
(21) Anmeldenummer: 98914795.4
(22) Anmeldetag: 20.02.1998
(51) Int. Cl.: G01L 13/02

(54) **DRUCKDIFFERENZ-MESSUMFORMER**
PRESSURE DIFFERENTIAL MEASURING TRANSDUCER
TRANSDUCTEUR DE MESURE DE PRESSION DIFFERENTIELLE

(30) Priorität: 28.02.1997 DE 19709846
(43) Veröffentlichungstag der Anmeldung: 12.01.2000
(73) Patentinhaber: SIEMENS AKTIENGESELLSCHAFT, 80333 München (DE)
(72) Erfinder: VON RAUCH, Moriz, D-14055 Berlin (DE)
(86) Internationale Anmeldenummer: DE9800515
(87) Internationale Veröffentlichungsnummer: WO98038484

(56) Entgegenhaltungen:
- EP-A- 0 753 728
- WO-A-85/02677
- WO-A-88/01049
- US-A- 2 979 955
- US-A- 4 895 026

## Beschreibung

Aus der europäischen Patentschrift EP 0 164 413 B1 ist ein Druckdifferenz-Meßumformer bekannt, bei dem die Membranscheibe als ein Membran-Wafer aus Silizium ausgeführt ist; die beiden nebeneinander liegenden Meßmembranen sind dadurch gebildet, daß der Membran-Wafer im Bereich der beiden Meßmembranen durch Ätzen verdünnt ist. Die beiden Meßmembranen grenzen an einen gemeinsamen Fluidraum an, der durch eine Ausnehmung in einem weiteren Wafer gebildet ist, der fest mit dem Membran-Wafer verbunden ist. Auf der von dem gemeinsamen Fluidraum abgewandten Seite der Meßmembranen sind diese mit einem ersten und einem zweiten Druck beaufschlagt, so daß die Auslenkung jeder der beiden Meßmembranen die Druckdifferenz wiedergibt.

Der Erfindung liegt die Aufgabe zugrunde, einen Druckdifferenz-Meßumformer vorzuschlagen, bei dem Nullpunkt und Empfindlichkeit nahezu völlig unabhängig von Änderungen des statischen Druckes sind.

Zur Lösung dieser Aufgabe ist bei einem Druckdifferenz-Meßumformer mit einer an einer Fläche einer Membranscheibe befindlichen, mit einem ersten Druck auf ihrer einen Seite beaufschlagbaren ersten Meßmembran und mit einer neben der ersten Meßmembran liegenden und mit einem zweiten Druck auf ihrer einen Seite beaufschlagbaren zweiten Meßmembran sowie mit einem gemeinsamen, dichten Fluidraum, der an die anderen Seiten der Meßmembranen grenzt, der erste Druck dem offenen Ende eines an seinem anderen Ende geschlossenen Röhrchens zuführbar, und ein die erste Meßmembran tragender Teil der Membranscheibe durchdringt das Innere des Röhrchens zwischen dessen beiden Enden abgedichtet und ist so bemessen, daß der erste Druck die Membranscheibe im Innern des Röhrchens beidseits beaufschlagen kann; ein die zweite Meßmembran aufweisender weiterer Teil der Membranscheibe erstreckt sich in einen an das Röhrchen angrenzenden Innenraum eines Behälters, dem der zweite Druck zuführbar ist, derart, daß er beidseits mit dem zweiten Druck beaufschlagbar ist.

Der wesentliche Vorteil des erfindungsgemäßen Druckdifferenz-Meßumformers besteht darin, daß der die erste Meßmembran tragende Teil der Membranscheibe beidseitig dem einen Druck ausgesetzt ist, so daß ein "Atmen" dieses Teils der Membranscheibe bei Änderungen des statischen Drucks nicht auftreten kann. Entsprechendes gilt hinsichtlich des zweiten Teils der Membranscheibe, weil auch dieser Teil allseits von dem zweiten Druck beaufschlagt ist. Es treten also insgesamt bei dem erfindungsgemäßen Druckdifferenz-Meßumformer Volumenänderungen der Membranscheibe bei einer Änderung des statischen Druckes nicht ein, so daß die Vorspannung der beiden Meßmembranen nicht verändert wird; dadurch sind der Nullpunkt und die Empfindlichkeit unabhängig vom statischen Druck, was sich sehr vorteilhaft auf die Meßgenauigkeit des erfindungsgemäßen Druckdifferenz-Meßumformers auswirkt.

Bei dem erfindungsgemäßen Druckdifferenz-Meßumformer kann die Membranscheibe aus unterschiedlichen Materialien hergestellt sein. Als besonders vorteilhaft wird es im Hinblick auf eine möglichst einfache Herstellung und eine möglichst kleine Bauform des Meßumformers insgesamt angesehen, wenn die Membranscheibe aus Silizium und das Röhrchen aus einem in seinem Temperaturausdehnungskoeffizienten dem Silizium ähnlichen Werkstoff bestehen.

Zur abgedichteten Halterung der Membranscheibe in dem Röhrchen wird es als vorteilhaft angesehen, wenn der eine Teil der Membranscheibe an dem Röhrchen mittels eines Lotes oder eines Klebers abgedichtet gehalten ist. Dabei kann der Kleber in vorteilhafter Weise Keramik-Kügelchen enthalten; es besteht dann die Möglichkeit, überall den Abstand zwischen der Membranscheibe und den Querschlitzen im Röhrchen gleichmäßig breit zu halten.

Bezüglich der Unterbringung des mit der Membranscheibe versehenen Röhrchens in einem Gesamtaufbau des erfindungsgemäßen Druckdifferenz-Meßumformers bestehen verschiedene Möglichkeiten; als besonders vorteilhaft wird es angesehen, wenn das Röhrchen mit seinem offenen Ende im Bereich einer Öffnung des Behälters abgedichtet angebracht ist und der Behälter eine weitere Öffnung aufweist, über die der zweite Druck zuführbar ist.

Zur weiteren Erläuterung der Erfindung ist in
- Figur 1: ein Längsschnitt durch ein schematisch dargestelltes Ausführungsbeispiel des erfindungsgemäßen Druckdifferenz-Meßumformers und in
- Figur 2: ein Querschnitt entlang der Linie 2-2 desselben Ausführungsbeispiels wiedergegeben.

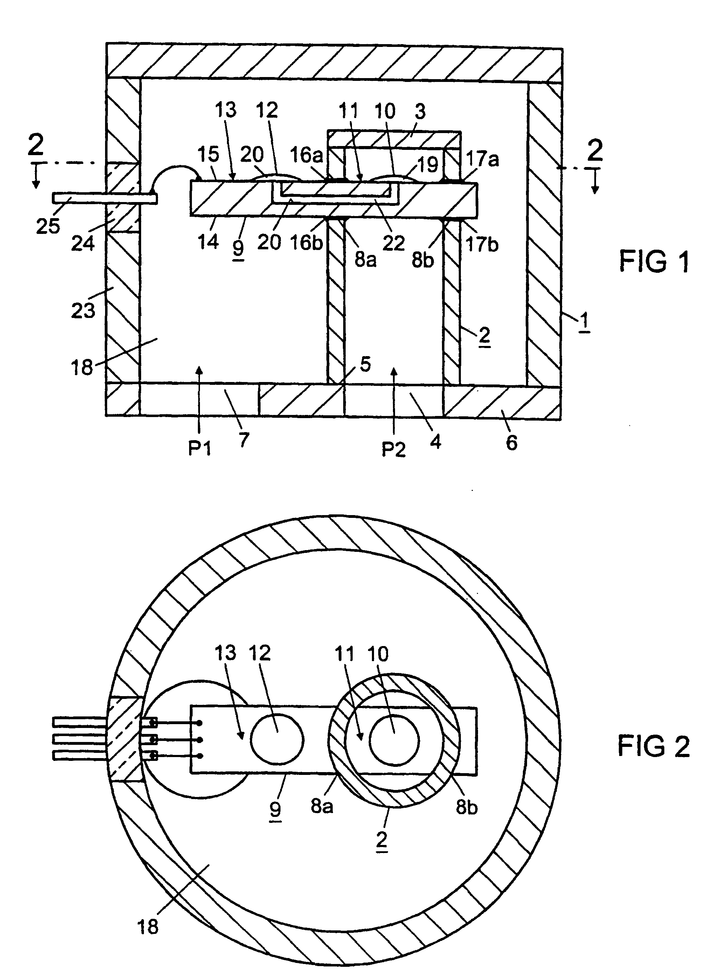

Wie die Figuren 1 und 2 erkennen lassen, ist in einem Behälter 1 ein Röhrchen 2 untergebracht. Das Röhrchen 2 ist an seinem in der Figur 1 oberen Ende 3 geschlossen und an seinem anderen Ende 4 offen. Der Rand 5 des offenen Endes 4 des Röhrchens 2 ist dicht mit einem Abdeckteil 6 des Behälters 1 verbunden. Über das offene Ende 4 ist das Röhrchen 2 mit einem ersten Druck P1 beaufschlagt. Über eine weitere Öffnung 7 des Behälters 1 ist ein Anschluß an einen zweiten Druck P2 vorgenommen.

Wie die Figuren ferner zeigen, ist das Röhrchen 2 mit zwei diametralen Schlitzen 8a und 8b versehen, in die von der Seite her eine Membranscheibe 9 eingebracht ist. Die Membranscheibe 9 weist einen eine in den Figuren nur schematisch angedeutete erste Meßmembran 10 tragenden Teil 11 und einen eine ebenfalls nur schematisch dargestellte zweite Meßmembran 12 tragenden weiteren Teil 13 auf. Die Membranscheibe 9 ist mit ihrem einen Teil 11 so durch die Schlitze 8a und 8b des Röhrchens 2 geschoben, daß sich die erste Meßmembran 10 vollkommen innerhalb des Röhrchens 2 befindet; dabei ist dafür Sorge getragen, daß durch den einen Teil 11 das Röhrchen 2 in seinem Querschnitt nicht völlig ausgefüllt ist, damit der erste Druck P1 den einen Teil 11 der Membranscheibe 9 nicht nur auf dessen einer Seite 14, sondern auch auf dessen anderer Seite 15 beaufschlagt. Der eine Teil 11 der Membranscheibe 9 ist also auf beiden Seiten mit dem ersten Druck P1 beaufschlagt und verändert sich daher in seinen Abmessungen bei Änderungen des statischen Druckes nicht.

Wie insbesondere die Figur 1 zeigt, ist der eine Teil 11 der Membranscheibe 9 durch jeweils zwei Klebestellen 16a und 16b bzw. 17a und 17b dichtend mit dem Röhrchen 2 verbunden. Dabei ist darauf geachtet, daß der dafür verwendete Kleber ölbeständig ist, weil sich innerhalb des Röhrchens 2 und innerhalb des Behälters 7 bis zu üblichen, nicht gezeigten Trennmembranen Öl befindet. Gegebenenfalls kann der Kleber auch Keramik-Kügelchen enthalten, wenn die Spalte zwischen der Membranscheibe 9 und dem Röhrchen 2 im Bereich der Schlitze 8a und 8b gleichmäßig ausgefüllt sein sollen.

Der weitere Teil 13 der Membranscheibe 9 liegt vollkommen im Innenraum 18 des Behälters 7, und zwar frei dem zweiten Druck P2 ausgesetzt, wie es die Figur 1 erkennen läßt. Dies bedeutet, daß der weitere Teil 13 der Membranscheibe 9 überall dem Druck P2 ausgesetzt ist.

Die in der Figur 1 nur schematisch dargestellten Meßkammern 19 und 20 unterhalb der Meßmembranen 10 und 12 sind über eine Verbindungsleitung 21 unter Bildung eines gemeinsamen Fluidraums 22 miteinander verbunden, der in üblicher Weise mit Öl gefüllt und verschlossen ist.

Seitlich ist in einer Wand 23 des Behälters 7 eine Glasdurchführung 24 angebracht, durch die elektrische Anschlußstifte 25 geführt sind. Diese sind über Bonddrähte mit der Membranscheibe 9 verbunden.

Die Messung der Druckdifferenz mittels der entsprechend den Drücken P1 und P2 ausgelenkten Meßmembranen 10 und 12 kann in bekannter Weise erfolgen, weshalb einer guten Übersichtlichkeit halber diese Details in den Figuren nicht gezeigt sind. Beispielsweise ist es möglich, mit den Meßmembranen 10 und 12 und ihnen gegenüberliegenden Gegenelektroden jeweils einen Meßkondensator zu bilden und die sich entsprechend der Druckdifferenz ergebenden Kapazitätsänderungen elektrisch auszuwerten. Es ist aber auch beispielsweise möglich, auf beiden Meßmembranen 10 und 12 Widerstandsanordnungen nach Art von Dehnungsmeßstreifen vorzusehen und darüber eine der Druckdifferenz entsprechende Meßgröße zu gewinnen.

## Patentansprüche

1. Druckdifferenz-Meßumformer mit einer an einer Fläche einer Membranscheibe (9) befindlichen, mit einem ersten Druck (P1) auf ihrer einen Seite beaufschlagbaren ersten Meßmembran (10) und mit einer neben der ersten Meßmembran (10) liegenden und mit einem zweiten Druck (P2) auf ihrer einen Seite beaufschlagbaren zweiten Meßmembran (12) sowie mit einem gemeinsamen, dichten Fluidraum (22), der an die anderen Seiten der Meßmembranen (10, 12) grenzt, wobei
- der erste Druck (P1) dem offenen Ende eines an seinem anderen Ende geschlossenen Röhrchens (2) zuführbar ist,
- ein die erste Meßmembran (10) tragender Teil (11) der Membranscheibe (9) das Innere des Röhrchens (2) zwischen dessen beiden Enden abgedichtet durchdringt und so bemessen ist, daß der erste Druck (P1) die Membranscheibe (9) im Innern des Röhrchens beidseits beaufschlagen kann, und
- ein die zweite Meßmembran (12) aufweisender weiterer Teil (13) der Membranscheibe (9) sich in einen an das Röhrchen (2) angrenzenden Innenraum (18) eines Behälters (1), dem der zweite Druck (P2) zuführbar ist, derart erstreckt, daß er beidseits mit dem zweiten Druck (P2) beaufschlagbar ist.

2. Druckdifferenz-Meßumformer nach Anspruch 1, **dadurch gekennzeichnet, daß**
- die Membranscheibe (9) aus Silizium und das Röhrchen (2) aus einem in seinem Temperaturausdehnungskoeffizienten dem Silizium ähnlichen Werkstoff bestehen.

3. Druckdifferenz-Meßumformer nach einem der vorangehenden Ansprüche, **dadurch gekennzeichnet, daß**
- der eine Teil (11) der Membranscheibe (9) an dem Röhrchen (2) mittels eines Lotes oder eines Klebers abgedichtet gehalten ist.

4. Druckdifferenz-Meßumformer nach Anspruch 3, **dadurch gekennzeichnet, daß**
- der Klebstoff Keramik-Kügelchen enthält.

5. Druckdifferenz-Meßumformer nach einem der vorangehenden Ansprüche, **dadurch gekennzeichnet, daß**
- das Röhrchen (2) mit seinem offenen Ende (4) im Bereich einer Öffnung des Behälters (1) abgedichtet angebracht ist und
- der Behälter (1) eine weitere Öffnung (7) aufweist, über die der zweite Druck (P2) zuführbar ist.

## Claims

1. Pressure differential measuring transducer with a first measurement membrane (10) which is located on one side of a membrane disc (9) and can be exposed to a first pressure (P1) on its one side, and with a second measurement membrane (12) which lies next to the first measurement membrane (10) and can be exposed to a second pressure (P2) on its one side, and with a common sealed fluid chamber (22) which abuts the other sides of the measurement membranes (10, 12), where
- the first pressure (P1) can be supplied to the open end of a tube (2) closed at its other end,
- a part (11) of the membrane disc (9) carrying the first measurement membrane (10) penetrates sealingly the inside of the tube (2) between its two ends and is dimensioned such that the first pressure (P1) can be applied to the membrane disc (9) on both sides within the tube, and
- a further part (13) of the membrane disc (9) with the second measurement membrane (12) extends into the interior (18) adjacent to the tube (2) of a container (1) to which the second pressure (P2) can be supplied, such that said membrane can be exposed to the second pressure (P2) on both sides.

2. Pressure differential measuring transducer according to claim 1, **characterised in that**
- the membrane disc (9) consists of silicon and the tube (2) of a material similar to silicon in its temperature expansion co-efficient.

3. Pressure differential measuring transducer according to any of the previous claims, **characterised in that**
- the one part (11) of the membrane disc (9) is held sealed on the tube (2) by means of a solder or an adhesive.

4. Pressure differential measuring transducer according to claim 3, **characterised in that**
- the adhesive contains ceramic balls.

5. Pressure differential measuring transducer according to any of the previous claims, **characterised in that**
- the tube (2) is attached sealingly with its open end (4) in the area of an opening of the container (1), and
- the container (1) has a further opening (7) via which the second pressure (P2) can be supplied.

## Revendications

1. Transducteur de mesure de différence de pression, comprenant une première membrane (10) de mesure se trouvant sur une surface d'un disque (9) de membrane et pouvant être soumise, sur l'un de ses côtés, à une première pression (P1) et une deuxième membrane (12) de mesure se trouvant à côté de la première membrane (10) de mesure et pouvant être soumise, sur l'un de ses côtés, à une deuxième pression (P2), ainsi qu'une chambre (22) commune étanche pour du fluide, qui est voisine des autres côtés des membranes (10, 12) de mesure, dans lequel
- la première pression (P1) peut être appliquée à l'extrémité ouverte d'un petit tube (2) fermé à son autre extrémité,
- une partie (11) du disque (9) de membrane qui porte la première membrane (10) de mesure, traverse avec étanchéité l'intérieur du petit tube (2) entre ses deux extrémités et a des dimensions telles que la première pression (P1) peut être appliquée des deux côtés au disque (9) de membrane à l'intérieur du tube, et
- une autre partie (13) du disque (9) de membrane ayant la deuxième membrane (12) de mesure s'étend dans une chambre (18) intérieure, voisine du petit tube (2), d'une cuve (1) qui peut être mise sous la deuxième pression (P2), de façon à ce qu'elle puisse être soumise des deux côtés à la deuxième pression (P2).

2. Transducteur de mesure de différence de pression suivant la revendication 1, **caractérisé en ce que**,
- le disque (9) de membrane est en silicium et le petit tube (2) est en un matériau ayant un coefficient de dilatation thermique semblable à celui du silicium.

3. Transducteur de mesure de différence de pression suivant l'une des revendications précédentes, **caractérisé en ce que**
- la partie (11) du disque (9) de membrane est maintenue de manière étanche sur le petit tube (2) au moyen d'une brasure ou d'une colle.

4. Transducteur de mesure de différence de pression suivant la revendication 3, **caractérisé en ce que** la colle contient des billes de céramique.

5. Transducteur de mesure de différence de pression suivant l'une des revendications précédentes, **caractérisé en ce que**
- le petit tube (2) est monté de manière étanche en ayant son extrémité (4) ouverte dans la zone d'une ouverture de la cuve (1), et
- la cuve (1) a une autre ouverture (7) par laquelle elle peut être mise sous la deuxième pression (P2).
